Europäisches Patentamt

European Patent Office

Office européen des brevets

(19)

(11) Publication number: **0 249 583 B1**

(12) **EUROPEAN PATENT SPECIFICATION**

(45) Date of publication of patent specification: **15.04.92**

(51) Int. Cl.5: **D21H 27/00**, **B44F 1/00**, **B32B 29/00**

(21) Application number: **87830208.2**

(22) Date of filing: **01.06.87**

The file contains technical information submitted
after the application was filed and not included in
this specification

(54) Decorative plastics laminate and method for its manufacture.

(30) Priority: **13.06.86 IT 6748986**

(43) Date of publication of application:
**16.12.87 Bulletin 87/51**

(45) Publication of the grant of the patent:
**15.04.92 Bulletin 92/16**

(84) Designated Contracting States:
**AT BE CH DE ES FR GB GR IT LI LU NL SE**

(56) References cited:
**EP-A- 0 013 267**
**FR-A- 2 436 677**
**GB-A- 1 136 650**

(73) Proprietor: **ABET LAMINATI S.p.A.**
**Viale Industria 21**
**I-12042 Bra (Cuneo)(IT)**

(72) Inventor: **Jannon, Guido**

**deceased(IT)**
Inventor: **Bogana, Raffaele**
**Strada Falchetto 68**
**I-12042 BRA (Cuneo)(IT)**
Inventor: **Grosso, Marco**
**via P. Ferrero 12**
**I-12051 ALBA (Cuneo)(IT)**

(74) Representative: **Rambelli, Paolo et al**
**Jacobacci-Casetta & Perani S.p.A. Via Alfieri**
**17**
**I-10121 Torino(IT)**

EP 0 249 583 B1

## Description

The present invention relates to decorative plastics laminates of the type constituted by a plurality of superposed cellulose-based sheets impregnated with thermosetting resin and intimately bonded together by pressure and heat.

The decorative high-pressure plastics laminates, known as HPL, now in production are typically formed by a pack of sheets of kraft paper, generally of a tawny colour, impregnated with phenolic resin, and by at least one decorative sheet disposed on the faces of the pack of sheets of kraft paper and constituted by alpha-cellulose including mineral fillers and pigments impregnated with melamine resin. A protective surface sheet, called an "overlay", of alpha-cellulose impregnated with melamine resin may be superposed on the decorative sheet.

The repetition schemes of decorative plastics laminates currently sold are, for example, as follows:

1) overlay
2) decorative
3) pack of sheets of kraft paper
2) decorative
1) overlay

or

2) decorative
3) pack of sheets of kraft paper
2) decorative

where:

1) the overlay is constituted by alpha-cellulose having a substance generally of from 20 to 40 $g/m^2$ and impregnated with melamine resin;

2) the decorative is constituted by alpha-cellulose including mineral fillers and pigments, which is solid-coloured, printed or silk-screen printed, has a substance generally of from 60 to 160 $g/m^2$, and is impregnated with melamine resin;

3) the pack is constituted by a plurality of sheets of kraft paper, generally of a tawny colour, having a substance of from 120 to 260 $g/m^2$ and impregnated with phenolic resin.

High-pressure decorative plastics laminates are typically produced with a thickness which can vary from 0.5 to 30 mm by the subjection of sheets impregnated with the respective resins to a pressure generally of from 5 to 10 MPa at a temperature in the range 120 to 160°C.

The product thus obtained has a very good resistance to abrasion, water, impacts and chemical reagents in general, along with good mechanical characteristics. The laminate is thus normally used for covering walls, parts of furniture, working surfaces, partitions and the like.

EP-A-0 013 267 relates to a process for the production of a laminate wherein a paper web impregnated with a resinous solution, is bonded under tensile stress to at least a second layer of paper web, by applying an ionizing radiation.

The preamble of the specification relating to the prior art, refers to conventional decorative laminates such as described above, having a core of kraft paper and including highly pigmented decorative sheets and an overlay sheet of alpha-cellulose, which are bonded together by means of heat at a temperature of from 130 to 180°C under pressure of the order of 1 - 12 MPa.

The process of bonding under tensile stress and by applying a ionizing radiation, according to that invention, may be applied to any kind of sheet including pigmented, printed or coloured sheets of any paper material which is generally used in the production of laminates.

GB-A-1 136 650 relates to a post-formable cured laminate, having improved post-formability, which comprises a post-formable substrate and surface lamination which is impregnated with the reaction product of formaldehyde and melamine in a given molar ratio.

The post-formable substrate is made of kraft paper impregnated with post-formable phenol-formaldehyde and the surface lamination is preferably a sheet of alpha-cellulose which corresponds to the conventional overlay which is used in high pressure laminates.

FR-A-2 436 677 relates to a decorative laminate which consists of a stack made of one or more sheets of kraft paper, impregnated with a phenol resin, which are placed on a substrate, and one or more sheets which may be of alpha-cellulose, which are impregnated with a noble resin which are transparent after curing of the resin.

Heat and pressure are applied to the stack in a press having a plate with reliefs and depressions so as to obtain a laminate whose surface has complementary reliefs and depressions and where those parts of the kraft paper sheets which are impregnated with phenol resin, under the depressed areas, are bonded together in a higher degree and assume a more intense colour in respect of those parts laying underneath the adjacent zones which are not depressed.

The aim is to obtain an aesthetic effect of the laminate which imitates natural materials, such as leather and timber, and is based on the observation that when the kraft paper is impregnated with phenol resin, the degree of bonding between the sheets increases with the pressure applied and the higher the degree of bonding, the higher is the colour intensity.

The object of the present invention is to provide a decorative plastics laminate having a particular aesthetic property, without prejudice to the mechanical characteristics and resistance typical of prior-art laminates.

This object is achieved by a decorative plastics laminate characterised in that the core thereof consists essentially of a plurality of substantially translucent sheets constituted by 60 to 100% by weight of alpha-cellulose and from 0 to 40% by weight of rayon fibres, impregnated with thermosetting amino resin.

The sheets having the characteristics mentioned above typically have a substance of from 25 to 100 g/m$^2$. They may be unprinted or partially printed by rotogravure or by a silk-screen or offset process. The pack constituted by the sheets may be homogeneous or differently printed and unprinted sheets may be intercalated within the pack in order to give the desired aesthetic decorative appearance.

The plastics laminate thus obtained offers particular decorative effects by virtue of the play of transparency between the layers of incorporated cellulose sheets. This effect can be obtained both on the faces of the laminate and on its edges at the end of the finishing process.

It is also possible to achieve further decorative effects on the flat surfaces by appropriate incisions.

Surface-protective "overlay" sheets of conventional type impregnated with melamine resins may be placed on the faces of the pack of translucent sheets, and decorative sheets of conventional type also impregnated with melamine resins may be interposed within the pack.

Preferred schemes for the plastics laminate of the invention are given by way of example. The conventional overlay and decorative sheets are indicated in the following schemes by the same reference numerals, (1) and (2) respectively, used with reference to the schemes of the conventional technique indicated previously. In the following schemes, the pack of translucent sheets of alpha-cellulose, possibly including rayon used in accordance with the present invention, is indicated (4).

Scheme 1:

(4)

Scheme 2:

(1) overlay
(4)
(2) decorative
(4)
(1) overlay

Scheme 3:

(1) overlay

(4)
(2) decorative
(4)
(2) decorative
(4)
(1) overlay

It is understood that the decorative sheet (2) of conventional type may be introduced into Schemes 2 and 3 in a manner which can vary according to requirements.

With reference to Scheme 1, numerous variants are also possible according to the number of translucent cellulose sheets (4) used and their arrangement in the pack, according to whether they are unprinted or printed by rotogravure or by silk-screen or offset process. At the same time, the variables relate to thickness and decorative appearance. The thickness may be a function of requirements and can vary within the range 0.5 to 30 mm.

With reference to the Schemes 2 and 3, numerous variants are also possible in this case in dependence on the arrangement of the cellulose sheets constituting the pack (4) and their alternation with the conventional components (1) and (2).

The thermosetting amino resin with which the sheets constituting the pack (4) are impregnated is a melamine/formaldehyde-based resin, possibly mixed with acetoguanamine/formaldehyde resin and/or benzoguanamine/formaldehyde resin. When the melamine resin is used in a mixture with an acetoguanamine or benzoguanamine resin, ratios between the two resins in the range 1:0.1 to 1:1 are preferably used.

The impregnation of the sheets constituting the laminate of the invention is carried out in a continuous machine where the paper web, after immersion in the resin used, enters a drying oven at a temperature of from 120° to 160°C and is subsequently cut to the desired format.

The impregnation and the drying in the oven are carried out so as to obtain the following desirable characteristics:

resin content        40-70% by weight
content of volatile substances        4- 7% by weight
flow        2-20% by weight

The weight of the dried, impregnated sheet is preferably in the range 42 to 330 g/m$^2$.

For the production of the laminate according to the invention the impregnated sheets are superposed, possibly in combination with an overlay and a decorative sheet in accordance with the preferred schemes given above. The pack thus obtained is introduced into a non-continuous press and subjected to a pressure within the range 5 to 10 MPa at a temperature of between 120 and 160° to cause the cross-linking of the resins.

The laminate thus produced has excellent technical characteristics comparable with those of an HPL laminate and at least conforming to the characteristics set out in the UNIPLAST 355/356 and 150 4586 I/II standards; more particularly, the laminate obtained has very good characteristics of resistance to abrasion, water, chemical reagents and impacts. The mechanical characteristics are those of a material having self-supporting properties.

The decorative effect which is obtained is particularly interesting because of the fact that the incorporated cellulose layers give a particular opalescence never obtained previously.

The laminate according to the invention will now be described in detail by means of non-limiting examples.

Example 1

50 sheets of translucent cellulose paper consisting of 99% by weight of alpha-cellulose with a substance of 60 $g/m^2$ are impregnated with melamine/formaldehyde resin in a molar ratio of 1:1.8 in aqueous solution.

After drying in an oven, the resin content of the impregnated sheet is 60% wt, with a volatile content of 5.5% wt and a flow value of 7% wt.

A pack is made up from the fifty sheets thus obtained and is placed in a non-continuous press operating at a pressure of 10 MPa and a temperature of 130°C for thirty minutes.

The pack is kept at a pressure of 10 MPa and cooled to 50°C. The laminate obtained has a thickness of 5 mm and has a particular opalescence which gives the desired decorative effect.

The technical characteristics are those for high-pressure plastics laminates (HPL) regulated by the UNIPLAST 355/356 and ISO 4586 I and II standards.

Example 2

The method of Example 1 is repeated with the use of translucent cellulose sheets consisting of 70% by weight of alpha-cellulose and 30% by weight of rayon fibres. After drying, the resin content is 62% wt, the volatile content 4.5% wt and the flow value is 10% wt. The plastics laminate obtained has characteristics conforming with those of the plastics laminate obtained by the method of Example 1.

Example 3

The method of Example 1 is repeated to form a pack consisting of 25 translucent sheets of 99% alpha-cellulose, a decorative sheet, and 25 translucent sheets of 99% alpha-cellulose.

After drying the resin content is 58% wt, the volatile content 7% wt and the flow value 12% wt.

The plastics laminate obtained has a thickness of 5.1 mm and has an opalescence which is just as special as that of the laminates obtained by Examples 1 and 2.

**Claims**

1. A decorative plastics laminate including a core of a plurality of superposed cellulose-based sheets impregnated with thermosetting resin and bonded together by heat and pressure of from 5 to 10 MPa, characterised in that said core consists of a plurality of substantially translucent sheets constituted by 60 to 100% by weight of alpha-cellulose and from 0 to 40% by weight of rayon fibers and interposed within said core at least one of said translucent sheets which is at least partially printed with a decorative pattern or a decorative sheet, said sheets being impregnated with an amino resin selected from the group of melamine/formaldehyde resin and mixtures thereof with acetoguanamine/formaldehyde and/or benzoguanamine/ formaldehyde, whereby the laminate shows a decorative aesthetic effect due to opalescence and/or play of transparency between the sheet layers.

2. A decorative plastics laminate including a plurality of superposed cellulose-based sheets impregnated with thermosetting resin and bonded together by heat and pressure of from 5 to 10 MPa, characterised in that it consists of a core of a plurality of translucent sheets constituted by 60 to 100% by weight of alpha-cellulose and from 0 to 40% by weight of rayon fibers, at least a decorative sheet disposed on each opposite sides of said core and a plurality of said translucent sheets disposed between said decorative sheets and a surface overlay sheet, disposed on opposite sides of the laminate, the sheets constituting the laminate being impregnated with an amino resin selected from the group of melamine/formaldehyde resin and mixtures thereof with acetoguanamine/formaldehyde and/or benzoguanamine/formaldehyde, whereby the laminate shows a decorative aesthetic effect due to opalescence and/or play of transparency between the sheet layers.

3. A decorative laminate according to Claims 1 or 2 wherein said translucent sheets have a substance of 25 to 100 $g/m^2$.

4. A decorative laminate according to Claim 1 characterised in that it includes, on at least one of its faces at least one overlay sheet impregnated with a thermosetting amino resin.

5. A decorative laminate according to Claims 2 or 4, wherein the overlay has a substance 20 to 40 g/m$^2$.

6. A decorative laminate according to any of the preceding claims wherein the decorative sheet has a substance of 60 to 160 g/m$^2$.

7. A decorative laminate according to anyone of the claims 1-6 characterised in that said sheets are impregnating with a melamine/formaldehyde resin, possibly mixed with a benzoguanamine/formaldehyde and/or acetoguanamine formaldehyde resin in a ratio of from 1:0.1 to 1:1.

8. A method for the manufacture of decorative plastics laminates according to any of claims 1 to 7 wherein the sheets are impregnated with thermosetting resin and dried and the dried sheets are stacked and subjected to pressure and heat to bind the sheets together characterised in that, the impregnation and subsequent drying are carried out so as to obtain a resin content of from 40 to 70% by weight, a content of volatile substances of from 4 to 7% by weight and flow of from 2 to 20% by weight.

9. A method according to claim 8 wherein the stacked sheets are subjected to a pressure of from 5 to 10 MPa and a temperature of from 120 to 160°C to cause cross-linking of the impregnating resins.

**Revendications**

1. Stratifié décoratif en matière plastique, comprenant une âme constituée de plusieurs feuilles à base de cellulose superposées, imprégnées avec une résine thermodurcissable et liées ensemble à chaud et sous une pression de 5 à 10 MPa, caractérisé en ce que ladite âme consiste en plusieurs feuilles à peu près translucides constituées de 60 à 100 % en poids d'alpha-cellulose et de 0 à 40 % en poids de fibres de rayonne, au moins l'une de ces feuilles translucides, sur au moins une partie de laquelle, est imprimé un dessin décoratif, ou une feuille décorative, étant interposée à l'intérieur de l'âme, lesdites feuilles étant imprégnées avec une résine aminée choisie parmi une résine mélamine/formaldéhyde et les mélanges de celle-ci avec une résine acétoguanamine/formaldéhyde et/ou benzoguanamine/ formaldéhyde, de sorte que le stratifié procure un effet esthétique décoratif dû à l'opalescence et/ou au jeu de la transparence entre les feuilles stratifiées.

2. Stratifié décoratif en matière plastique, comprenant plusieurs feuilles superposées à base de cellulose, imprégnées avec une résine thermodurcissable et liées ensemble à chaud et sous une pression de 5 à 10 MPa, caractérisé en ce qu'il consiste en une âme comprenant plusieurs feuilles translucides constituées de 60 à 100 % en poids d'alpha-cellulose et de 0 à 40 % en poids de fibres de rayonne, au moins une feuille décorative étant disposée sur chacune des faces opposées de ladite âme, et plusieurs de ces feuilles translucides étant disposées entre lesdites feuilles décoratives et une feuille de recouvrement superficielle, disposées sur les faces opposées du stratifié, les feuilles constituant le stratifié étant imprégnées avec une résine aminée choisie parmi une résine mélamine/formaldehyde et les mélanges de celle-ci avec une résine acétoguanamine/formaldéhyde et/ou benzoguanamine/formaldéhyde, de sorte que le stratifié procure un effet esthétique décoratif dû à l'opalescence et/ou au jeu de la transparence entre les feuilles stratifiées.

3. Stratifié décoratif selon la revendication 1 ou 2, dans lequel les feuilles translucides ont un grammage de 25 à 100 g/m$^2$.

4. Stratifié décoratif selon la revendication 1, caractérisé en ce qu'il comprend, sur au moins l'une de ses faces, au moins une feuille de recouvrement imprégnée avec une résine aminée thermodurcissable.

5. Stratifié décoratif selon la revendication 2 ou 4, dans lequel la feuille de recouvrement a un grammage de 20 à 40 g/m$^2$.

6. Stratifié décoratif selon l'une quelconque des revendications précédentes, dans lequel la feuille décorative a un grammage de 60 à 160 g/m$^2$.

7. Stratifié décoratif selon l'une quelconque des revendications 1 à 6, caractérisé en ce que ces feuilles sont imprégnées avec une résine mélamine/formaldéhyde éventuellement mélangée avec une résine benzoguanamine/formaldéhyde et/ou une résine acétoguanamine/formaldéhyde, selon un rapport de 1:0,1 à 1:1.

8. Procédé de fabrication de stratifiés décoratifs en matière plastique selon l'une quelconque des revendications 1 à 7, dans lequel les feuilles sont imprégnées avec une résine thermodurcissable et séchées, et les feuilles séchées sont empilées, chauffées et comprimées, pour lier les feuilles ensemble, caractérisé en ce que l'imprégnation et le séchage ultérieur , sont effectués de façon à obtenir une teneur en résine de 40 à 70 % en poids, une teneur en substances volatiles de 4 à 7 % en poids, et une fluidité de 2 à 20 % en poids.

9. Procédé selon la revendication 8, dans lequel les feuilles empilées sont soumises à une pression de 5 à 10 MPa et à une température de 120 à 160 °C afin de réticuler les résines d'imprégnation.

**Patentansprüche**

1. Dekoratives Kunststofflaminat mit einem Kern aus mehreren übereinander angeordneten, mit Duroplast imprägnierten und durch Wärme und Druck von 5 bis 10 MPa miteinander verklebten Filmen auf Cellulosebasis, dadurch gekennzeichnet, daß der Kern mehrere im wesentlichen durchscheinende Filme umfaßt, die aus 60 bis 100 Gew.% Alpha-Cellulose und 0 bis 40 Gew.% Reyonfasern bestehen und innerhalb des Kerns angeordnet sind, wobei zumindest einer dieser durchscheinenden Filme zumindest teilweise mit einem dekorativen Muster bedruckt oder ein Dekorfilm ist, und wobei diese Filme mit einem Aminoharz imprägniert sind, welches aus der Gruppe von Melamin/Formaldehydharz und Mischungen desselben mit Acetoguanamin/Formaldehyd und/oder Benzoguanamin/Formaldehyd ausgewählt wird, wodurch das Laminat durch die Opaleszenz und/oder das Transparenzspiel zwischen den Filmschichten eine dekorative, ästhetische Wirkung aufweist.

2. Dekoratives Kunststofflaminat mit einem Kern aus mehreren übereinander angeordneten, mit Duroplast imprägnierten und durch Wärme und Druck von 5 bis 10 MPa miteinander verbundenen Filmen auf Cellulosebasis, dadurch gekennzeichnet, daß es besteht aus: einem Kern aus einer Mehrzahl von durchscheinenden Filmen, die aus 60 bis 100 Gew.% Alpha-Cellulose und 0 bis 40 Gew.% Reyonfasern bestehen, mindestens einem Dekorfilm, der an gegenüberliegenden Seiten des Kerns angeordnet ist, und einer weiteren Mehrzahl von durchscheinenden Filmen, die zwischen den Dekorfilmen und einem Overlayfilm an gegenüberliegenden Seiten des Laminats angeordnet sind, wobei die das Laminat bildenden Filme mit einem Aminoharz imprägniert sind, welches aus der Gruppe von Melamin/Formaldehydharz und Mischungen desselben mit Acetoguanamin/Formaldehyd und/oder Benzoguanamin/Formaldehyd ausgewählt wird, wodurch das Laminat durch die Opaleszenz und/oder das Transparenzspiel zwischen den Filmschichten eine dekorative, ästhetische Wirkung aufweist.

3. Dekoratives Laminat nach Anspruch 1 oder 2, dadurch gekennzeichnet, daß die durchscheinenden Filme eine Masse von 25 bis 100 $g/m^2$ aufweisen.

4. Dekoratives Laminat nach Anspruch 1, dadurch gekennzeichnet, daß es zumindest an einer Seite mindestens einen mit einem wämrehärtbaren Aminoharz imprägnierten Overlayfilm aufweist.

5. Dekoratives Laminat nach Anspruch 2 oder 4, dadurch gekennzeichnet, daß der Overlayfilm eine Masse von 20 bis 40 $g/m^2$ aufweist.

6. Dekoratives Laminat nach einem der vorhergehenden Ansprüche, dadurch gekennzeichnet, da der Dekorfilm eine Masse von 60 bis 160 $g/m^2$ aufweist.

7. Dekoratives Laminat nach einem der Ansprüche 1 bis 6, dadurch gekennzeichnet, daß die Filme mit einem Melamin/Formaldehydharz, möglicherweise in einem Verhältnis von 1:0,1 bis 1:1 mit einem Benzoguanamin/Formaldehyd und/oder Acetoguanaminformaldehydharz gemischt, imprägniert sind.

8. Verfahren zur Herstellung von dekorativen Kunststofflaminaten nach einem der Ansprüche 1 bis 7, dadurch gekennzeichnet, daß die Filme mit Duroplast imprägniert und getrocknet werden und die getrockneten Filme übereinandergelegt und Druck und Hitze unterworfen werden, um die Filme miteinander zu verbinden, dadurch gekennzeichnet, daß das Imprägnieren und darauffolgende Trocknen so erfolgen, daß man einen Harzgehalt von 40 bis 70 Gew.%, einen Gehalt an flüchtigen Stoffen von 4 bis 7 Gew.% und einen Harzabfluß von 2 bis 20 Gew.% erhält.

9. Verfahren nach Anspruch 8, dadurch gekennzeichnet, daS die übereinanderangeordneten Filme einem Druck von 5 bis 10 MPa und einer Temperatur von 120 bis 160°C ausgesetzt werden, um eine Vernetzung der imprägnierenden Harze zu bewirken.